(19)

Europäisches Patentamt
European Patent Office
Office européen des brevets

(11)    **EP 2 353 225 B1**

(12)         **EUROPEAN PATENT SPECIFICATION**

(45) Date of publication and mention
of the grant of the patent:
**22.03.2017   Bulletin 2017/12**

(21) Application number: **09829299.8**

(22) Date of filing: **24.11.2009**

(51) Int Cl.:
**H04B 10/116** (2013.01)

(86) International application number:
**PCT/KR2009/006919**

(87) International publication number:
**WO 2010/062092 (03.06.2010 Gazette 2010/22)**

(54) **VISIBLE RAY COMMUNICATION SYSTEM AND METHOD FOR TRANSMITTING SIGNAL**

KOMMUNIKATIONSSYSTEM MIT SICHTBAREN STRAHLEN SOWIE VERFAHREN ZUR ÜBERTRAGUNG VON SIGNALEN

SYSTÈME DE COMMUNICATION PAR RAYONNEMENT VISIBLE ET PROCÉDÉ PERMETTANT DE TRANSMETTRE UN SIGNAL

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **25.11.2008   JP 2008298940**

(43) Date of publication of application:
**10.08.2011   Bulletin 2011/32**

(73) Proprietor: **Samsung Electronics Co., Ltd.
Suwon-si, Gyeonggi-do, 443-742 (KR)**

(72) Inventor: **YOKOI, Atsuya
Yokohama-shi
Kanagawa 230-0027 (JP)**

(74) Representative: **Birchenough, Lewis et al
HGF Limited
Saviour House
9 St Saviourgate
York YO1 8NQ (GB)**

(56) References cited:
JP-A- 2004 173 153        JP-A- 2008 252 444
JP-A- 2008 252 444        KR-A- 20080 066 893
US-A1- 2008 181 617

• **ELGALA H ET AL: "OFDM Visible Light Wireless Communication Based on White LEDs", I E E E V T S VEHICULAR TECHNOLOGY CONFERENCE. PROCEEDINGS, IEEE, US, 1 April 2007 (2007-04-01), pages 2185-2189, XP031093017, ISSN: 1550-2252, DOI: 10.1109/VETECS.2007.451 ISBN: 978-1-4244-0266-3**
• **AFGANI M Z ET AL: "Visible Light Communication Using OFDM", TESTBEDS AND RESEARCH INFRASTRUCTURES FOR THE DEVELOPMENT OF NETWORKS AND COMMUNITIES, 2006. TRIDENTCOM 2006. 2ND INTERNATIONAL CONFERENCE O N BARCELONA, SPAIN MARCH 1-3, 2006, PISCATAWAY, NJ, USA,IEEE, PISCATAWAY, NJ, USA, 1 March 2006 (2006-03-01), pages 129-134, XP010924295, DOI: 10.1109/TRIDNT.2006.1649137 ISBN: 978-1-4244-0106-2**

**Description**

**Technical Field**

The present invention relates to a visible ray communication system and a method for transmitting a signal.

**Background Art**

An optical communication technology using the light in a visible light region has been recently greatly spotlighted. Especially, as an illuminating device using a luminous element, such as an LED (Light Emitting Diode), has rapidly come into wise use, development on a technology for achieving high speed data communication with high convenience by utilizing an infrastructure, such as an interior/exterior illuminating device, has been carried out.

As a light emitting means used for high speed optical data communication, an LED is the most powerful candidate in consideration of an influence on a human body or medical appliances. Meanwhile, a semiconductor light emitting element with a higher speed response performance, such as a laser diode (LD) or a super luminescent diode (SLD), is proposed as a candidate. The data transmission speed in the optical communication depends on a response speed of a light emitting element. Due to this reason, such a light emitting element with a higher speed response performance is spotlighted.

Also, in order to further improve the data transmission speed, a technology for stably transmitting lots of data during 1 signal emitted from a light emitting element is required. For example, as such an optical communication technology, Japanese Patent Laid-Open Publication HEI 2008-252444 discloses a technology of preventing spatial interference by allocating a time axis of an OFDM (Orthogonal Frequency-Division Multiplexing) signal in a spatial direction.

A technique for transmitting data, in which the time-varying intensity of a single white LED is controlled according to an OFDM symbol, is described in Engala, H. et al, "OFDM Visible Light Wireless Communication Based on White LEDs", IEEE VTS Vehicular Technology Conference Proceedings, 1 April 2007, pages 2185-2189.

**Disclosure of Invention**

**Technical Problem**

If an OFDM scheme is used, it is possible to improve the frequency use efficiency and multi-pass resistance. Therefore, the OFDM scheme is widely used in a wireless communication system (e.g. wireless LAN) or a wire communication system (e.g. ADSL). It is also expected to improve the communication quality through employing the OFDM scheme in the visible ray communication. However, there is a problem of increasing a Peak to Average Power Ratio (PAPR) in the OFDM scheme. That is, a large dynamic range is required in a transmitter and receiver.

Accordingly, if the OFDM scheme is applied to the visible ray communication, greatly large current flows on an LED that is a transmission means in the visible ray communication. For example, current of several 100mA to several A flows on the LED. Therefore, it is required to install a drive circuit capable of handling a signal of a greatly wide dynamic range on a transmission side. However, the conventional LED is for the purpose of emitting light of a certain light quantity so that a specific device is required so as to handle the signal of the large dynamic range, which is, however, far from realistic. In this respect, the inventor of the present invention developed a new scheme capable of achieving the effect of improving the communication quality that can be obtained through the OFDM scheme, without requiring for the light emitting means of the performance with the large dynamic range.

If the OFDM scheme is applied to the visible ray communication, transmission data as much as the number of carriers are generated through serial-to-parallel conversion in the transmission side, each transmission data is allocated to a carrier signal to be added, and light emission of one LED is controlled in a light-emitting strength according to signal amplitude after the corresponding addition. However, according to the new scheme of the present invention, each transmission data is allocated to the carrier signal and light emission of one LED corresponding to each carrier is controlled in a light-emitting strength according to signal amplitude for every carrier without executing an addition processing. As a result, the requirement of the dynamic range performance imposed to each LED and LED driving circuit is relieved. Further, the LED of different colors is used for a light-emitting means and a Photo Diode (PD) of different colors is used for a light-receiving means so that the requirement of the dynamic range performance imposed to the light-receiving means can be relieved.

Further, if a plurality of LEDs of different light-emitting colors (light frequency) is used, there are concerns on influence of inter-color interference generated by a frequency property of the LED and PD, but there is an orthogonal property between the carriers as described above so that the influence by the inter-color interference is prevented. Therefore, it is possible to increase the number of multiplexing (the number of colors) by a certain degree and improve the transmission rate. However, the frequency between the colors is adjacent according to the increase of the number of multiplexing and thus the influence of inter-color interference increases so that there is a limitation in an effect of transmission rate increase through the increase of the number of multiplexing. For this reason, in order to more improve the transmission rate, technology for transmitting more data with the same number of multiplexing has been required.

**Solution to Problem**

Accordingly, the present invention has been made to solve the above-stated problems occurring in the prior art, and an object of the present invention is to provide a novel and improved visible ray communication system and a method for transmitting a signal which can improve the communication quality that can be obtained in the OFDM scheme without requiring the light-emitting means of the performance of the large dynamic range and transmit more data with the same number of multiplexing.

In accordance with a first aspect of the present invention, there is provided a visible ray communication system, comprising a transmission apparatus including: a plurality of light emitting devices for emitting light of different colors; a serial-to-parallel convertor for serial-to-parallel converting serial transmission data into N parallel data signals and a control signal; a modulator for generating N modulation signals by modulating the N parallel data signals output from the serial-to-parallel convertor; a sine wave signal multiplier for generating N carrier signals by respectively multiplying the N modulation signals by N sine wave signals having an orthogonal carrier frequency; a carrier allocation unit for receiving the N carrier signals and the control signal, allocating the N carrier signals to the plurality of light emitting devices based on the control signal, adding carrier signals allocated to the same light emitting devices, and generating a transmission signal for each of the plurality of light emitting devices; and a light emitting controller for controlling each of the plurality of light emitting devices to emit light at a light emitting strength according to a signal amplitude of its respective transmission signal.

In exemplary embodiments of the present invention, the transmission apparatus implements the visible ray communication using the plurality of light emitting devices emitting the light of different colors. Further, the transmission apparatus modulates the transmission data into the plurality of carrier signals to transmit the modulated signal and allocates the control signal to the corresponding relation between each carrier signal and color (each light emitting device) to transmit it. For this reason, in embodiments of the present invention, it is possible to transmit more data as much as the control signal in comparison with the conventional WDM scheme and achieve the effect of the improvement of the transmission rate. Further, it is possible to achieve the unique and excellent communication performance in the OFDM scheme so as to allocate the N parallel data signals to the orthogonal carrier frequency and transmit it. Especially, the influence of the inter-color interference that is a problem in the conventional WDM scheme is removed from the orthogonality of the carrier frequency, so that the transmission quality can be greatly improved in comparison with the conventional WDM scheme.

In accordance with a second aspect of the present invention, there is provided a visible ray communication system, comprising: a reception apparatus including: a plurality of light receiving devices for receiving light of different colors and outputting a reception signal of each color; a Fast Fourier Transform (FFT) unit for FFT processing the reception signals output from the plurality of light receiving devices using N sine wave signals having an orthogonal carrier frequency to extract N modulation signals corresponding to the reception signal of each color; a demodulator for demodulating the N modulation signals extracted to restore N parallel data signals; a restoration unit for detecting a relationship between a carrier signal corresponding to the reception signal of each color and a light emitting device of each color based on the N modulation signals, and restoring a control signal from the N modulation signals; and a parallel-to-serial convertor for parallel-to-serial converting the N parallel data signals and the control signal to restore serial transmission data; wherein N is a positive integer.

In exemplary embodiments of the present invention, the reception apparatus implements the visible ray communication using the plurality of light receiving devices receiving the light of different colors. Further, the reception apparatus performs the FFT processing for the reception signal for each color and extracts the carrier signal included in the transmission signal of each color. For this reason, based on the output result of the FFT processing executed for each color, it is possible to detect each carrier signal being allocated to which light emitting device (color). The reception apparatus restores the control signal based on the output result of the FFT processing executed for the reception signal of each color. Further, the reception apparatus restores the data signal from each carrier signal. Further, through this, the original transmission data is restored from the restored N parallel data signals and control signal. Therefore, more data quantity as much as the control signal is transmitted. As a result, the transmission rate can be improved in comparison with the WDM scheme.

In an exemplary embodiments of the present invention, the carrier allocation unit comprises: N switches, each including an input port to which each carrier signal is input and a plurality of output ports corresponding to the plurality of light emitting devices, respectively, for switching an output destination of each of the carrier signals input to the input port to any of the output ports; a switch controller for controlling each of the N switches based on the control signal and controlling the output destination of the carrier signals input to each of the N switches; and a plurality of adders for adding the carrier signals outputted from the output port corresponding to the same light emitting devices for the N switches, the plurality of adders being same in number as the plurality of light emitting devices. Further, the carrier allocation unit is configured to allocate carrier signals such that a same carrier signal is not allocated for different colors. Through such a construction, the transmission signal including the carrier signal of the same carrier frequency is not allocated to the different color and the occurrence of the inter-color interference can be prevented.

In an exemplary embodiment of the present invention, the restoration unit comprises: a signal determination unit for determining if each of the N carrier signals is included in the reception signal of each color; and a combination detection unit for detecting combination of each of the colors and carrier signals based on a determination result in the signal determination unit and restoring the control signal from a corresponding combination.

In accordance with a third aspect of the present invention, there is provided a method for transmitting a signal in a visible ray communication system, comprising the steps of: serial-to-parallel converting, by a transmitter including a plurality of light emitting devices, serial transmission data into N parallel data signals and a control signal; modulating the N parallel data signals to generate the N modulation signals; generating N carrier signals by multiplying the N modulation signals by N sine wave signals having an orthogonal carrier frequency, respectively; allocating the N carrier signals to the plurality of light emitting devices based on the control signal; adding carrier signals allocated to a same light emitting device; generating a transmission signal for each of the plurality of light emitting devices; and controlling each of the light emitting devices to emit light in a light emitting strength according to a signal amplitude of its transmission signal.

In accordance with a fourth aspect of the present invention, there is provided a method for transmitting a signal in a visible ray communication system, comprising the steps of: receiving, by a receiver including a plurality of light reception devices, a light of different colors and outputting a reception signal of each color; FFT processing a reception signal output from each of the plurality of light receiving devices using N sine wave signals having an orthogonal carrier frequency to extract N modulation signals corresponding to the reception signal of each color; demodulating the N modulation signals to restore N parallel data signals; detecting a relationship between each of the N carrier signals corresponding to the reception signal of each color and a plurality of light emitting devices of each color based on the N modulation signals; restoring a control signal based on the relationship; and parallel-to-serial converting the N parallel data signals and the control signal to restore the serial transmission data.

## Advantageous Effects of Invention

As described above, the visible ray communication system LS2 according to the present embodiment allocates each carrier signal component of the OFDM signal that is modulated into the transmission information with respect to the plurality of LEDs with different light color. At this time, each carrier signal adds information on the combination of the carrier frequency when the carrier signal is allocated to the LED and the LED wavelength, in addition to being modulated into the information. Through the construction, the transmission rate can be improved in comparison with the WDM scheme. At the same time, the influence of the inter-color interference that is the problem in the WDM scheme can be removed. As a result, the present invention can improve the communication quality and also improve the selection method for the LED or PD and the freedom degree of the number of LEDs or PDs to be installed. Further, even though the number of carriers increases, the transmittable data quantity is not greatly decreased, so that the visible ray communication system LS2 according to the present invention can be constructed to improve the multi-pass resistance through increasing the number of carriers.

## Brief Description of Drawings

The foregoing and other objects, features and advantages of the present invention will become more apparent from the following detailed description when taken in conjunction with the accompanying drawings in which:

FIG. 1 is a diagram illustrating an example of the construction of a visible ray communication system in a WDM scheme;
FIG. 2 is a diagram illustrating an example of the construction of a visible ray communication system according to an embodiment of the present invention;
FIG. 3 is a diagram illustrating the detailed function of a transmission apparatus according to an embodiment of the present invention;
FIGs. 4A to 4C are diagrams illustrating an example of a method for allocating a carrier according to an embodiment of the present invention;
FIG. 5 is a diagram illustrating the detailed function of a signal detection unit according to an embodiment of the present invention; and
FIG. 6 is a diagram illustrating an effect obtained through applying technology according to an embodiment of the present invention.

**Mode for the Invention**

Hereinafter, the first exemplary embodiments of the present invention will be described with reference to the accompanying drawings. In the following description, detailed explanation of known related functions and constitutions may be omitted to avoid unnecessarily obscuring the subject matter of the present invention.

[Description sequence]

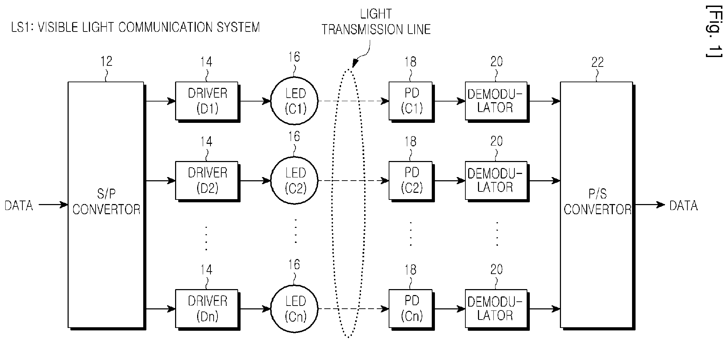

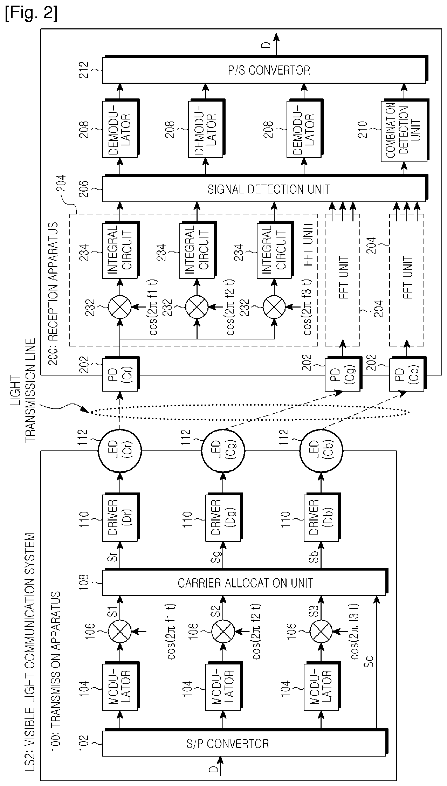

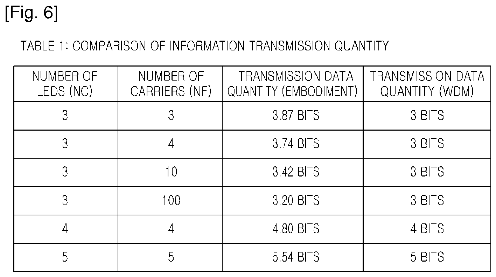

Here, the description sequence of an embodiment of the present invention will be briefly described. First, the construction of a visible ray communication system LS 1 employing a Wavelength Division Multiplexing (WDM) scheme and the problem of the WDM scheme will be described with reference to FIG. 1. Further, the object to be solved in the embodiment will be briefly summarized. Next, the construction of a visible ray communication system LS2 according to the present embodiment will be described with reference to FIGs. 2 to 4. Finally, an effect obtained through applying technology according to the embodiment of the present invention will be described with reference to FIG. 6.

[Object summary]

First, the object to be solved in the embodiment will be briefly summarized prior to the detailed description of the technology according to the embodiment of the present invention.
The conventional visible ray communication system employing the LED as a light source includes a system emitting white light using a white LED and a system emitting white light through combining a plurality of LEDs emitting light of different colors (e.g. 3 primary colors of red R, green G, and blue B). The RGB-emitting LED is characterized in the faster response rate than the white LED in light modulation. Further, the system employing a plurality of LEDs modulates each of the LEDs into different data and combines the RGB light emission so that it is possible to transmit the data in a high speed. As such, a scheme for transmitting different data in the plurality of LEDs emitting light of different colors is referred to as a color division multiplexing scheme or Wavelength Division Multiplexing (WDM) scheme. Visible ray communication technology in the WDM scheme is disclosed in Japanese Patent Publication No. 2007-81703.
Hereinafter, the construction of the visible ray communication system LS 1 employing the WDM scheme will be described with reference to FIG. 1. FIG. 1 is a diagram illustrating one example of the construction of the visible ray communication system LS1 employing the WDM scheme.
As illustrated in FIG. 1, a transmission side of the visible ray communication system LS1 includes an S/P convertor 12, a plurality of driver circuits 14, a plurality of light emitting devices 16. The plurality of light emitting devices 16 emits light of different colors C1 to Cn (light frequency). The receiving side of the visible ray communication system LS1 includes a plurality of light receiving devices 18, a plurality of modulators 20, and a P/S convertor 22. A plurality of light emitting devices 18 receives light of different colors C1 to Cn (light frequency). For example, the light emitting device 16 can use the LED emitting light of each color. Further, the light receiving device 18 can use the PD including a color filter that transmits each color.
In the visible ray communication system LS1, a transmission data is first serial-to-parallel converted by the S/P convertor 12 and parallel data as much as N numbers of light emitting devices 16 are generated. That is, the parallel data capable of being allocated to each color C1 to Cn is generated. Further, each of the parallel data is inputted to the driver circuit 14. The driver circuit 14 make the light emitting device 16 emit the light in the light-emitting strength according to the inputted parallel data. The light generated through the light emitting device 16 of each color C1 to Cn is received in the light receiving device 18 of each color C1 to Cn. If the light of the color corresponding to each light receiving device 18 is received, the signal according to the light receiving strength of the corresponding color is outputted from the light receiving device 18. The signal outputted from the light receiving device 18 is demodulated in the demodulator 20 and restored in the original transmission data by a PS convertor 22.
In the visible ray communication system LS1 employing the WDM scheme, the deterioration of the transmission quality is incurred for the following reasons. The reasons of the deterioration of the transmission quality are (1) the degradation of the light strength in a light transmission line, (2) noise generation by external light, (3) variation of the signal strength between colors, and (4) the signal interference between colors. Only, the reason (3) is generated due to the characteristic of the light emitting strength of the light emitting device 16 and the characteristic of the photosensitivity of the light receiving device 18. Further, the reason (4) is generated due to the frequency characteristic of the light emitting device 16 and the light receiving device 18. In the reasons of the deterioration, the deterioration of the transmission quality by the reason (4) is great in the WDM scheme. Specifically, in order to obtain the effect of the improvement of the transmission rate through increasing the number of colors and the number of multiplexing increases, the deterioration of the transmission quality by the reason (4) becomes a substantial problem. This is because that if the number of multiplexing increases, the frequency of each color is adjacent so that the inter-color interference increases. Therefore, in order to more improve the transmission rate, the removal of the inter-color interference and the transmission of more data with the same number of multiplexing are required.

<Embodiment>

Hereinafter, the embodiment of the present invention will be described. According to the embodiment of the present invention, the problem of the visible ray communication system LS1 is solved, and the inter-color interference is removed and the more data is transmitted with the same number of multiplexing.

[Construction of visible ray communication system LS2]

First, the visible ray communication system LS2 according to the embodiment will be described with reference to FIG. 2. FIG. 2 is a diagram illustrating an example of the construction of the visible ray communication system LS2 according to the embodiment of the present invention. For the description convenience, 3 carriers, 3 light emitting devices 112, and 3 light receiving devices 202 are included in FIG. 2. It is a matter of course that technology according to the present embodiment can be applied to the case where there are 3 or more carriers, light emitting devices 112, and light receiving devices 202.

As shown in FIG. 2, the visible ray communication system LS2 includes a transmission apparatus 100 and a reception apparatus 200. The transmission apparatus 100 includes an S/P convertor 102, a modulator 104, a multiplier 106, a carrier allocator 108, a driver circuit 110, and the plurality of light emitting devices 112. In the meantime, the reception apparatus 200 includes the plurality of light receiving devices 202, FFT unit 204, a signal detection unit 206, a demodulator 208, and a P/S convertor 212. Only, the FFT unit 204 includes a multiplier 232 and an integral circuit 234. In FIG. 2, the detailed construction of each FFT unit 204 to which an output signal of the light emitting device 202 (PD (Cg), PD (Cb)) is inputted is omitted. Only, any FFT unit 204 actually has the identical construction.

First, a transmission data d is serial-to-parallel converted by the S/P convertor 102. Then, the data rows with the number (the number of carriers + 1) are outputted from the S/P convertor 102. The data row corresponding to each carrier outputted from the S/P convertor 102 is inputted to the modulator 104 and modulated with a predetermined number of dimensions (e.g. a value of 2).

Then, a modulated signal is outputted from the modulator 104. In the meantime, remained one data row is a control data row Sc for allocating the carrier and is inputted to the carrier allocator 108. The modulation signal for every carrier outputted from the modulator 104 is inputted to the multiplier 106. A carrier sine wave signal corresponding to each carrier frequency f1, f2, and f3 is multiplied to the modulation signal in the multiplier 106. Only, 3 carrier sine wave signals corresponding to each carrier frequency f1, f2, and f3 are orthogonally related to each other in the OFDM scheme.

The modulation signal (hereinafter, carrier signal S1, S2, and S3) multiplied by the carrier sine wave signal in the multiplier 106 is inputted to the carrier allocator 108. The carrier allocator 108 determines which carrier is allocated to which color and generates a signal used for controlling the light emission of each color. Only, the allocating method is determined by a control data row Sc for allocating the carrier inputted from the S/P convertor 102. The detailed construction of the carrier allocator 108 will be described later. The signal allocated to each color (hereinafter, a color allocation signal) in the carrier allocator 108 is inputted to the driver circuit 110 corresponding to each color. If the color allocation signal is inputted, the driver circuit 110 controls a current quantity supplied to the light emitting device 112 based on the inputted color allocation signal and makes each light emitting device 112 emit the light in the light-emitting strength according to the signal amplitude of the color allocation signal.

For example, the color allocation signal Sr allocated to red color R (light frequency Cr) is inputted to the driver circuit Dr 110 for driving the light emitting device (LED (Cr)) 112 that emits the light of red color R. Then, the driver circuit Dr 110 makes the light emitting device (LED (Cr)) 112 emit the light in the light-emitting strength according to the signal amplitude of the color allocation signal Sr. This is likewise in the color allocation signal Sg, Sb allocated to the light of green color G (light frequency Cg) and blue color B (light frequency Cb). The light generated from each light emitting device 112 is received in the reception apparatus 202 of each color of the reception apparatus 200. The light receiving device 202, for example, can use 3 PDs including a color filter corresponding to each color. If the light is received by each light receiving device 202, an electric signal (hereinafter, a reception signal) according to the light strength of each color is outputted from the light receiving device 202. The reception signal of each color outputted from the light receiving device 202 is inputted to the FFT unit 204 provided for every color. Each FFT unit 204 is a means for extracting a carrier frequency component included in the color allocation signal of each color through executing the FFT processing for each reception signal.

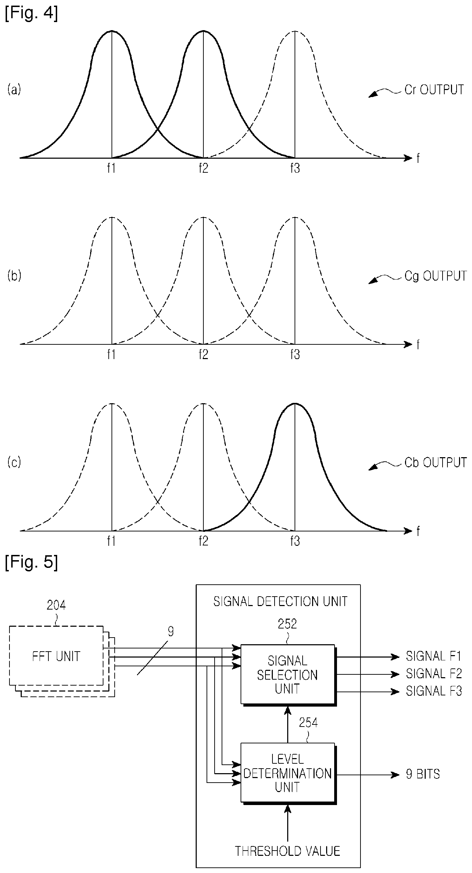

Herein, for the description convenience, the FFT processing executed for the reception signal outputted from the light receiving device 202 corresponding to the red color R will be described only. First, the reception signal outputted from the light receiving device (PD (Cr)) 202 is inputted to the multiplier 232. The carrier sine wave signal corresponding to each carrier frequency f1, f2, and f3 is multiplied to the reception signal in the multiplier 232. The reception signal multiplied by the carrier sine wave signal in the multiplier 232 is inputted to the integral circuit 234. The integral circuit 234 executes an integral operation for an integral block up to an OFDM symbol length T on a time axis with respect to the output signal of the multipliers 232 and extracts the signal component corresponding to each carrier frequency f1, f2, and f3. Then, each carrier frequency component extracted in the integral circuit 234 is inputted to the signal detection unit 206. For example, the carrier signal S1 and S2 corresponding to the carrier frequency f1 and f2 are allocated to the red color R, the signal component (modulation signal) corresponding to the carrier signal s1 and S2 are inputted in the signal detection unit 206. In the meanwhile, the same processing is actually executed for the green color G and blue color B. As described above, each carrier component included in the color allocation signal of each color is separated by the FFT unit 204 of each color and the separated carrier component of each color is inputted to the signal detection unit 206. Therefore, the signal detection unit 206 can detect which carrier signal is included in which color allocation signal. For example, as shown in FIG. 5, the signal detection unit 206 can detect a type of the carrier signal included in each color allocation signal based on total 9 signals (corresponding to the modulation signal) inputted from 3 FFT units 204. As illustrated in FIG. 5, the signal detection unit 206 includes a signal selection unit 252 and a level determination unit 254. As described above, the signal detection unit 206 receives 3 carrier components from each FFT unit 204, respectively, so that total 9 carrier components are totally inputted to the signal detection unit 206. Then, 9 carrier components are inputted to the signal selection unit 252 and the level determination unit 254. Further, a predetermined threshold value is inputted to the level determination unit 254. Therefore, the level determination unit 254 determines if the signal amplitude of each carrier component exceeds the predetermined threshold value.

For example, the predetermined threshold value is set as a value that is higher than a noise level and lower than the signal amplitude of the carrier component including information of the carrier signal. Then, if the signal amplitude of the carrier component is below the predetermined threshold value, this indicates that the carrier component does not include the carrier signal. Likewise, the determination processing is executed for 9 carrier components and the existence or nonexistence of the carrier signal is

outputted to a combination detection unit 210 at a rear end in a 9 bits data. Further, if the level determination unit 254 determines that the carrier signal exists in the carrier component, the information of the carrier component is inputted to the signal selection unit 252. Then, the signal selection unit 252 selects only the carrier components including the information of the carrier signal based on the information inputted from the level determination unit 254 to output the selected carrier component to each demodulator 208 at a rear end.

Therefore, the 9 bits data detected from the level determination unit 254 represents the relationship between each color allocation signal and each carrier signal. Further, the carrier component selected in the signal selection unit 252 corresponds to the modulation signal of each carrier frequency f1, f2, and f3. Therefore, the information representing the relationship between the color allocation signal and the carrier signal is inputted in the combination detection unit 210. Further, the modulation signal corresponding to the modulation signal of each carrier frequency f1, f2, and f3 is inputted to each demodulator 208. Such that, the signal detection unit 206 detects an allocation method determined in the carrier allocation unit 108 of the transmission apparatus 100. The allocation method is determined based on the control data row Sc for the carrier allocation. Conversely, if the allocation method can be detected, the control data row Sc for the carrier allocation can be detected based on the detection result.

The combination detection unit 210 detects the control data row Sc for the carrier allocation based on the relationship between each color allocation signal and carrier signal inputted from the signal detection unit 206. Then, the control data row Sc for the carrier allocation detected in the combination detection unit 210 is inputted to the P/S convertor 212. Meanwhile, each demodulator 208 performs the demodulation processing for the inputted modulation signal to demodulate the original parallel data. The parallel data demodulated by each demodulator 208 is inputted to the P/S convertor 212. Then, the PS convertor 212 parallel-to-serial converts the parallel data inputted from each demodulator 208 and the control data for the carrier allocation inputted from the combination detection unit 210 to restore them into the transmission data d. Through carrying the data on the combination that allocates each carrier to each color, more data can be transmitted with the same number of colors (the number of multiplexing).

The construction of the visible ray communication system LS2 according to the present invention has been described above. As described above, according to the present invention, the carrier signal corresponding to each carrier frequency is not added in a front end of the driver circuit 110 and each light emitting device 112 emits the light in the light emitting strength according to the signal amplitude of each carrier signal. For this reason, the problem of the PAPR increase is released in the OFDM scheme and the dynamic range required for the driver circuit 110 of each color and the light emitting device 112 can be controlled to be low. As a result, it is possible to achieve the improve effect of the communication quality in the OFDM scheme through using a compact and cheap LED driving circuit and LED. Further, each parallel data can be allocated to the orthogonal carrier sine wave signal so that the influence by the inter-color interference can be removed. Further, the data is carried on the carrier allocation method and transmitted so that it is possible to simultaneously transmit the data of the number of colors or more and the transmission rate can be improved without increasing the number of multiplexing. As a result, the transmission rate can be greatly improved in the visible ray communication.

<Detailed construction of the carrier allocation unit 108>

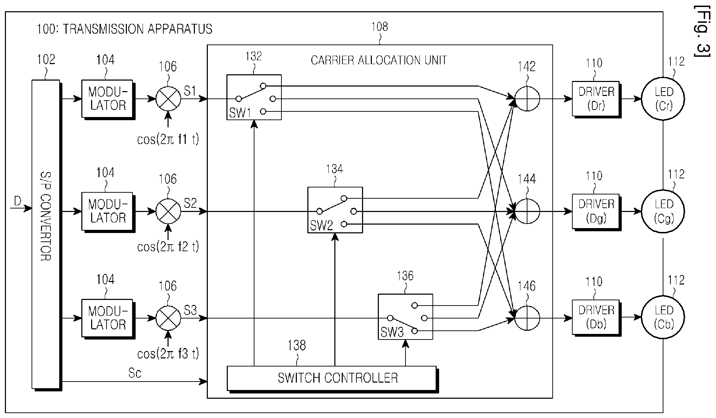

Here, the carrier allocation unit 108 included in the transmission apparatus 100 will be described with reference to FIG. 3 in detail. FIG. 3 is a diagram illustrating one example of the construction of the carrier allocation unit 108 and the carrier allocation method.

As shown in FIG. 3, the carrier allocation unit 108 includes 3 switches 132, 134, and 136, a switch controller 138, and 3 adders 142, 144, and 146. The carrier signal S1 corresponding to the carrier frequency f1 is inputted from the multiplier 106 to the switch (SW1) 132. The carrier signal S2 corresponding to the carrier frequency f2 is inputted from the multiplier 106 to the switch (SW2) 134. The carrier signal S3 corresponding to the carrier frequency f3 is inputted from the multiplier 106 to the switch (SW3) 136. Further, the control data row Sc for the carrier allocation is inputted to the switch controller 138.

The switches (SW1, SW2, and SW3) 132, 134, and 136 includes 3 output ports, respectively. For example, the switch (SW1) 132 outputs the carrier signal S1 inputted to an input port to any one output port according to the switch control by the switch controller 138. 3 output ports correspond to the light emitting device (LED(Cr), LED(Cg), and LED(Cb)) 112 of each color, respectively. That is, through selecting the output port of the switch (SW1) 132, the color allocated by the carrier signal S1 is determined. Likewise, the switch (SW2) 134 outputs the carrier signal S2 inputted to an input port to any one output port according to the switch control by the switch controller 138. Further, the switch (SW3) 136 outputs the carrier signal S3 inputted to an input port to any one output port according to the switch control by the switch controller 138.

As described above, the output port of the switches (SW1, SW2, and SW3) 132, 134, and 136 corresponds to the light emitting device (LED(Cr), LED(Cg), and LED(Cb)) 112 of each color, respectively. For this reason, the signal outputted from the output port corresponding to the same color is inputted to the adders 142, 144, and 146, regardless of the type. For example, in the output port corresponding to the red color R, the light emitting device (LED(Cr)) 112 of the red color R is driving controlled by the driver circuit (Dr) 110. Further, the driver circuit (Dr) 110 drives the light emitting device (LED(Cr)) 112 in the light emitting strength according to the amplitude of the signal outputted from the adder 142. Like this, the adder 142 corresponds to the red color R. Likewise, the adder 144 corresponds to the green color G. Further, the adder 146 corresponds to the blue color B.

Therefore, the signal is inputted to the adder 142 from the output port corresponding to the red color R of the switches (SW1, SW2, and SW3) 132, 134, and 136. Likewise, the signal is inputted to the adder 144 from the output port corresponding to the green color G of the switches (SW1, SW2, and SW3) 132, 134, and 136. Further, the signal is inputted to the adder 146 from the output port corresponding to the blue color B of the switches (SW1, SW2, and SW3) 132, 134, and 136. Each of the inputted signals is added in the adders 142, 144, and 146. The signal (color allocation signal) outputted from the adders 142, 144, and 146 is inputted to the driver circuit 110. The driver circuit 110 light-emitting controls the light emitting device 112 in the light emitting strength according to the amplitude of the inputted color allocation signal. The light emitting device 112 emits the light of the corresponding color according to the light emitting control by the driver circuit 110.

As described above, if the carrier signals S1, S2, and S3 are inputted, the carrier allocation unit 108 receives the switch control from the switch controller 138 and the switches 132, 134, and 136 allocate the carrier signals S1, S2, and S3 to each color. The carrier signals S1, S2, and S3 allocated to each color are added and the light of each color is emitted based on the color allocation signal generated through the adding processing. The flow of the signal in the carrier allocation unit 108 is as follows. Next, the allocation method by the switch controller 138 will be described.

In FIG. 3, 3 carrier signals S1, S2, and S3 are allocated to 3 colors Cr, Cg, and Cb. Therefore, the number of combinations is $3^3=27$. Accordingly, the transmittable data quantity through the allocation processing by the switch controller 138 is calculated by formula (1) below to be 4.75 bits. That is, if the construction of the carrier allocation unit 108 shown in FIG. 3 is employed, it is possible to transmit the data of 4.75 bits by being added to the data quantity transmitted with the carrier signals S1, S2, and S3.

$$\log_2 27 = 4.75 [bits]$$  ........ Formula (1)

Further, in the construction exemplified in the present embodiment, for the description convenience, the number of carriers and light emitting devices 112 (colors) are limited in 3. However, any number of carriers and colors can be applied in the construction of the present embodiment. For example, if the number of carriers is $n_f$ and the number of colors is $n_c$, the data quantity Ik additionally transmittable through the allocation method can be represented by formula (2) below. Therefore, the data quantity I transmittable by the transmission apparatus 100 according to the present embodiment can be represented by formula (3) below.

$$I_k = \log_2 n_c^{n_f} \, [bits]$$ ……… Formula (2)

$$I = (N_B n_c + \log_2 n_c^{n_f}) S \frac{2}{n_f + 1} \, [bits]$$ ……… Formula (3)

Only, in the above formulae, $N_B$ represents the number of bits per 1 symbol of the modulation wave of each carrier. Further, a coefficient, $(2/(n_f+1))$ represents a data compression ratio obtained through the increase of the number of carriers and the band division. Through carrying the coefficient, it is possible to directly compare the data quantity transmittable in the visible ray communication system LS1 in the WDM scheme with the data quantity transmittable in the visible ray communication system LS2 according to the embodiment of the present invention. Further, it is possible to change the modulation scheme in the modulator 104 for each carrier, but it is assumed here that the identical modulation scheme can be used for every carrier. The result of the comparison of the data quantity transmittable in the visible ray communication system LS1 in the WDM scheme with the data quantity transmittable in the visible ray communication system LS2 according to the present embodiment based on formula (3) is represented in Table 6. As described above, in the WDM scheme, the number of bits per 1 symbol is the transmittable data quantity, but in the present embodiment, the symbol length is changed according to the number of carriers. For this reason, the transmittable data quantity in the present embodiment uses the data quantity multiplied by the coefficient so as to be equivalent with the symbol length in the WDM scheme. Referring to FIG. 6, it can be identified that the data quantity according to the present embodiment exceeds the data quantity in the WDM scheme without depending on the number $n_c$ of LEDs and the number $n_f$ of carriers. Further, it can be identified that if the number nf of carriers increases, the transmittable data quantity decreases very little. Through this, it is possible to construct to improve the multi-pass resistance through lengthening the symbol length of the OFDM without greatly decreasing the transmittable data quantity.

Here, the supplementary description of the construction of the carrier allocation unit 108 and the control method by the switch controller 138 will be made. As illustrated in FIG. 3, if the carrier signals S1 and S2 are inputted to the adder 142 and the carrier signal S3 is inputted to the adder 146, the light of each color is generated from each light emitting device 112. FIGs. 4A to 4C schematically illustrate the signal distribution included in each light. FIG. 4A corresponds to an output of the light emitting device (LED(Cr)) 112, FIG. 4B corresponds to an output of the light emitting device (LED(Cg)) 112, and FIG. 4C corresponds to an output of the light emitting device (LED(Cb)) 112. Further, they are the spectrums including a solid line. According to the allocation example in FIG. 3, the signal of the carrier frequency f1 and f2 is represented in the signal distribution of the red color R (Cr output), there is no signal in the signal distribution of the green color G (Cg output), and the signal of the carrier frequency f3 is represented in the signal distribution of the blue color R (Cb output).

According to the present embodiment, if comparing a frequency spectrum of a single carrier signal, the Cr output is wide in a width. For this reason, if the single carrier signal emits light, the dynamic range required for the driver circuit 110 and the light emitting device 112 widens. However, if comparing with the case where the carrier signal emits light based on the signal amplitude of the OFDM signal adding all of 3 carrier signals S1, S2, and S3, the dynamic range can be controlled to be low. The purpose of the present embodiment is to decrease the requirement of the dynamic range performance imposed on each driver circuit 110 and light emitting device 112. Therefore, if the switch controller 138 executes the color allocation of the carrier signals S1, S2, and S3, it is preferred that the entire carrier signals S1, S2, and S3 are not allocated to the same color.

Further, the carrier allocation unit 108 is configured not to allocate the same carrier signal S1, S2, and S3 to the different color. That is, the switch 132, 134, and 136 is configured in such a manner that the carrier signal inputted from the input port is not outputted to the plurality of output ports. If the same carrier signal is allocated to the different color, the orthogonality of the carrier frequency between the colors loses. For this reason, the transmission quality is deteriorated due to the influence of the inter-color interference. Therefore, the carrier allocation unit 108 is configured not to allocate the same carrier signal to the different color in the present embodiment. Through the above construction, it is possible to maintain the characteristic of the OFDM scheme and remove the influence of the inter-color interference.

In the above description, the LED is exemplified for the light emitting means. However, the light emitting means can include a semiconductor light emitting device including an LD and SLD, a fluorescent lamp, a Cathode-Ray-Tube (CRT) display device, a Plasma Display Panel (PDP) device, an Organic Electroluminescent (EL) display device, and a liquid Crystal Display (LCD).

## Claims

1. A visible ray communication system, comprising:

   a transmission apparatus (100) including:

   a plurality of light emitting devices (112) for emitting light of different colors;
   a serial-to-parallel convertor (102) for serial-to-parallel converting serial transmission data into N parallel data signals and a control signal;
   a modulator (104) for generating N modulation signals by modulating the N parallel data signals output from the serial-to-parallel convertor;
   a sine wave signal multiplier (106) for generating N carrier signals by respectively multiplying the N modulation signals by N sine wave signals having an orthogonal carrier frequency;
   a carrier allocation unit (108) for receiving the N carrier signals and the control signal, allocating the N carrier signals to the plurality of light emitting devices (112) based on the control signal, adding carrier signals allocated to same light emitting devices, and generating a transmission signal for each of the plurality of light emitting devices (112); and
   a light emitting controller (110) for controlling each of the plurality light emitting devices (112) to emit light at a light emitting strength according to a signal amplitude of its respective transmission signal.

2. The visible ray communication system as claimed in claim 1, further comprising:

   a reception apparatus (200) including:

   a plurality of light receiving devices (202) for receiving the light of the different colors and outputting a reception signal of each color;
   a Fast Fourier Transform, FFT, unit (204) for FFT processing the reception signals output from the plurality of light receiving devices (202) using the N sine wave signals to extract the N modulation signals;
   a demodulator (208) for demodulating the N modulation signals extracted to restore the N parallel data signals;
   a restoration unit (206) for detecting a relationship between a carrier signal and a light emitting device (112) of each color based on the N modulation signals and restoring the control signal from the N modulation signals; and
   a parallel-to-serial convertor (212) for parallel-to-serial converting the N parallel data signals and the control signal to restore the serial transmission data,
   wherein N is a positive integer.

3. The visible ray communication system as claimed in claim 1 or claim 2, wherein the carrier allocation unit (108) comprises:

   N switches (132, 134, 136), each including an input port to which each carrier signal is input and a plurality of output ports corresponding to the plurality of light emitting devices (112), respectively, for switching an output destination of each of the carrier signals input to the input port to any of the output ports;
   a switch controller (138) for controlling each of the N switches (132, 134, 136) based on the control signal and controlling the output destination of the carrier signals input to each of the N switches (132, 134, 136); and
   a plurality of adders (142, 144, 146) for adding the carrier signals output from the output port corresponding to the same light emitting devices (112) for the N switches (132, 134, 136), the plurality of adders (142, 144, 146) being same in number as the plurality of light emitting devices (112).

4. The visible ray communication system as claimed in any one of claims 1 to 3, wherein the carrier allocation unit (108) is configured to allocate carrier signals such that a same carrier signal is not allocated for different colors.

5. The visible ray communication system as claimed in claim 2, wherein the restoration unit (206) comprises:

   a signal determination unit for determining if each of the N carrier signals is included in the reception signal of each color; and
   a combination detection unit (210) for detecting combinations of each of the colors and carrier signals based on a determination result in the signal determination unit and restoring the control signal from a corresponding combination.

6. A visible ray communication system, comprising:

a reception apparatus (200) including:

a plurality of light receiving devices (202) for receiving a light of different colors and outputting a reception signal of each color;
a Fast Fourier Transform, FFT, unit (204) for FFT processing the reception signals output from the plurality of light receiving devices (202) using N sine wave signals having an orthogonal carrier frequency to extract N modulation signals corresponding to the reception signal of each color;
a demodulator (208) for demodulating the N modulation signals extracted to restore N parallel data signals;
a restoration unit (206) for detecting a relationship between a carrier signal corresponding to the reception signal of each color and a light emitting device (112) of each color based on the N modulation signals, and restoring a control signal from the N modulation signals; and
a parallel-to-serial convertor (212) for parallel-to-serial converting the N parallel data signals and the control signal to restore serial transmission data;
wherein N is a positive integer.

7. The visible ray communication system as claimed in claim 6, wherein the restoration unit (206) comprises:

a signal determination unit for determining if each of the N carrier signals is included in the reception signal of each color; and
a combination detection unit (210) for detecting combinations of each of the colors and carrier signals based on a determination result in the signal determination unit and restoring the control signal from a corresponding combination.

8. A method for transmitting a signal in a visible ray communication system, comprising the steps of:

serial-to-parallel converting, by a transmitter (100) including a plurality of light emitting devices (112), serial transmission data into N parallel data signals and a control signal;
modulating the N parallel data signals to generate N modulation signals;
generating N carrier signals by multiplying the N modulation signals by N sine wave signals having an orthogonal carrier frequency, respectively;
allocating the N carrier signals to the plurality of light emitting devices (112) based on the control signal;
adding carrier signals allocated to a same light emitting device (112);
generating a transmission signal for each of the plurality of light emitting devices (112);
controlling each of the plurality of light emitting devices (112) to emit light in a light emitting strength according to signal amplitude of its transmission signal.

9. The method for transmitting a signal in a visible ray communication system as claimed in claim 8, further comprising the steps of:

receiving, by a receiver (200) including a plurality of light reception devices (202), the emitted light of different colors;
Fast Fourier Transform, FFT, processing a reception signal output from each of the plurality of light receiving devices (202) using the N sine wave signals to extract the N modulation signals for each color;
demodulating the N modulation signals to restore the N parallel data signals;
detecting a relationship between each of the N carrier signals and the plurality of light emitting devices of each color based on the N modulation signals;
restoring the control signal based on the relationship; and
parallel-to-serial converting the N parallel data signals the control signal to restore the serial transmission data.

10. A method for transmitting a signal in a visible ray communication system, comprising the steps of:

receiving, by a receiver (200) including a plurality of light reception devices (202), a light of different colors and outputting a reception signal of each color;
Fast Fourier Transform, FFT, processing a reception signal output from each of the plurality of light receiving devices (202) using N sine wave signals having an orthogonal carrier frequency to extract N modulation signals corresponding to the reception signal of each color;

demodulating the N modulation signals to restore N parallel data signals;

detecting a relationship between each of a N carrier signals corresponding to the reception signal of each color and a plurality of light emitting devices (112) of each color based on the N modulation signals;

restoring a control signal based on the relationship; and

parallel-to-serial converting the N parallel data signals and the control signal to restore the serial transmission data.

**Patentansprüche**

1. Kommunikationssystem mit sichtbaren Strahlen, das Folgendes umfasst:

   eine Übertragungsvorrichtung (100), die Folgendes umfasst:

   eine Vielzahl von lichtemittierenden Vorrichtungen (112) zum Emittieren von Licht unterschiedlicher Farben;

   einen Seriell-Parallel-Wandler (102) für die Seriell-Parallel-Umwandlung von seriellen Übertragungsdaten in N parallele Datensignale und ein Steuersignal;

   einen Modulator (104) zum Erzeugen von N Modulationssignalen durch Modulieren der N parallelen Datensignale, die von dem Seriell-Parallel-Wandler ausgegeben werden;

   einen Sinuswellensignalmultiplikator (106) zum Erzeugen von N Trägersignalen durch jeweiliges Multiplizieren der N Modulationssignale mit N Sinuswellensignalen, die eine orthogonale Trägerfrequenz aufweisen;

   eine Trägerzuweisungseinheit (108) für Folgendes: Empfangen der N Trägersignale und des Steuersignals, Zuweisen der N Trägersignale zu der Vielzahl von lichtemittierenden Vorrichtungen (112) basierend auf dem Steuersignal, Hinzufügen von Trägersignalen, die denselben lichtemittierenden Vorrichtungen zugewiesen sind, und Erzeugen eines Übertragungssignals für jede der Vielzahl von lichtemittierenden Vorrichtungen (112); und

   eine lichtemittierende Steuereinheit (110) zum Steuern jeder der mehreren lichtemittierenden Vorrichtungen (112), um Licht mit einer Lichtemissionsstärke gemäß einer Signalamplitude seines jeweiligen Sendesignals zu emittieren.

2. Kommunikationssystem mit sichtbaren Strahlen nach Anspruch 1, das ferner Folgendes umfasst:

   eine Empfangsvorrichtung (200), die Folgendes umfasst:

   eine Vielzahl von Lichtempfangsvorrichtungen (202) zum Empfangen des Lichts der verschiedenen Farben und zum Ausgeben eines Empfangssignals jeder Farbe;

   eine Fast-Fourier-Transformationseinheit, FFT-Einheit, (204) für die FFT-Verarbeitung der Empfangssignale, die von der Vielzahl von Lichtempfangsvorrichtungen (202) unter Verwendung der N Sinuswellensignale ausgegeben werden, um die N Modulationssignale zu extrahieren;

   einen Demodulator (208) zum Demodulieren der N Modulationssignale, die extrahiert wurden, um die N parallelen Datensignale wiederherzustellen;

   eine Wiederherstellungseinheit (206) zum Erfassen der Beziehung zwischen einem Trägersignal und einer lichtemittierenden Vorrichtung (112) jeder Farbe basierend auf den N Modulationssignalen

   und Wiederherstellen des Steuersignals aus den N Modulationssignalen; und einen Parallel-Seriell-Wandler (212) zur Parallel-Seriell-Umwandlung der N parallelen Datensignale und des Steuersignals, um die seriellen Übertragungsdaten wiederherzustellen, wobei N eine positive ganze Zahl ist.

3. Kommunikationssystem mit sichtbaren Strahlen nach Anspruch 1 oder Anspruch 2, wobei die Trägerzuweisungseinheit (108) Folgendes umfasst:

   N Schalter (132, 134, 136), die jeweils einen Eingangsanschluss aufweisen, an dem jedes Trägersignal eingegeben wird, und eine Vielzahl von Ausgangsanschlüssen aufweisen, die der Vielzahl von lichtemittierenden Vorrichtungen (112) entsprechen, zum Umschalten eines Ausgabeziels jedes der Trägersignale, die in den Eingangsanschluss eingegeben werden, auf einen der Ausgangsanschlüsse;

12

eine Schaltersteuereinheit (138) zum Steuern jedes der N Schalter (132, 134, 136) basierend auf dem Steuersignal und Steuern des Ausgabeziels der Trägersignale, die in jeden der N Schalter (132, 134, 136) eingegeben werden; und

eine Vielzahl von Addierern (142, 144, 146) zum Addieren der Trägersignale, die von dem Ausgangsanschluss ausgegeben werden, der denselben lichtemittierenden Vorrichtungen (112) für die N Schalter (132, 134, 136) entspricht, wobei die Vielzahl von Addierern (142, 144, 146) dieselbe Anzahl wie die Vielzahl von lichtemittierenden Vorrichtungen (112) aufweist.

4. Kommunikationssystem mit sichtbaren Strahlen nach einem der Ansprüche 1 bis 3, wobei die Trägerzuweisungseinheit (108) so konfiguriert ist, dass sie Trägersignale so zuweist, dass für unterschiedliche Farben kein gleiches Trägersignal zugeordnet wird.

5. Kommunikationssystem mit sichtbaren Strahlen nach Anspruch 2, wobei die Wiederherstellungseinheit (206) Folgendes umfasst:

eine Signalbestimmungseinheit zum Bestimmen, ob jedes der N Trägersignale in dem Empfangssignal jeder Farbe enthalten ist; und

eine Kombinationserfassungseinheit (210) für Folgendes: Erfassen von Kombinationen jeder Farbe und jedes Trägersignals basierend auf einem Bestimmungsergebnis in der Signalbestimmungseinheit und Wiederherstellen des Steuersignals aus einer entsprechenden Kombination.

6. Kommunikationssystem mit sichtbaren Strahlen, das Folgendes umfasst:

eine Empfangsvorrichtung (200), die Folgendes umfasst:

eine Vielzahl von Lichtempfangsvorrichtungen (202) zum Empfangen eines Lichts von verschiedenen Farben und zum Ausgeben eines Empfangssignals jeder Farbe;

eine Fast-Fourier-Transformationseinheit, FFT-Einheit, (204) für die FFT-Verarbeitung der Empfangssignale, die von der Vielzahl von Lichtempfangsvorrichtungen (202) unter Verwendung von N Sinuswellensignalen ausgegeben werden, die eine orthogonale Trägerfrequenz aufweisen, um N Modulationssignale zu extrahieren, die dem Empfangssignal von jedem Farbe entsprechen;

einen Demodulator (208) zum Demodulieren der N Modulationssignale, die extrahiert wurden, um N parallele Datensignale wiederherzustellen;

eine Wiederherstellungseinheit (206) zum Erfassen einer Beziehung zwischen einem Trägersignal, das dem Empfangssignal jeder Farbe entspricht, und einer lichtemittierenden Vorrichtung (112) jeder Farbe basierend auf den N Modulationssignalen und zum Wiederherstellen eines Steuersignals aus den N Modulationssignalen; und

einen Parallel-Seriell-Wandler (212) zur Parallel-Seriell-Umwandlung der N parallelen Datensignale und des Steuersignals, um serielle Übertragungsdaten wiederherzustellen; wobei N eine positive ganze Zahl ist.

7. Kommunikationssystem mit sichtbaren Strahlen nach Anspruch 6, wobei die Wiederherstellungseinheit (206) Folgendes umfasst:

eine Signalbestimmungseinheit zum Bestimmen, ob jedes der N Trägersignale in dem Empfangssignal jeder Farbe enthalten ist; und

eine Kombinationserfassungseinheit (210) für Folgendes: Erfassen von Kombinationen jeder Farbe und jedes Trägersignals basierend auf einem Bestimmungsergebnis in der Signalbestimmungseinheit und Wiederherstellen des Steuersignals aus einer entsprechenden Kombination.

8. Verfahren zur Übertragung eines Signals in einem Kommunikationssystem mit sichtbaren Strahlen, wobei das Verfahren folgende Schritte umfasst:

Seriell-Parallel-Umwandlung durch einen Sender (100), der eine Vielzahl von lichtemittierenden Vorrichtungen (112) umfasst, von seriellen Übertragungsdaten in N parallele Datensignale und ein Steuersignal;

Modulieren der N parallelen Datensignale, um N Modulationssignale zu erzeugen;

Erzeugen von N Trägersignalen durch jeweiliges Multiplizieren der N Modulationssignale mit N Sinuswellensignalen, die eine orthogonale Trägerfrequenz aufweisen;

Zuweisen der N Trägersignale zu der Vielzahl von lichtemittierenden Vorrichtungen (112) basierend auf dem Steuersignal;

Hinzufügen von Trägersignalen, die derselben lichtemittierenden Vorrichtung (112) zugewiesen sind,

Erzeugen eines Übertragungssignals für jede der Vielzahl von lichtemittierenden Vorrichtungen (112);

Steuern jeder der Vielzahl von lichtemittierenden Vorrichtungen (112), um Licht mit einer Lichtemissionsstärke gemäß einer Signalamplitude seines Sendesignals zu emittieren.

9. Verfahren zur Übertragung eines Signals in einem Kommunikationssystem mit sichtbaren Strahlen nach Anspruch 8, wobei das Verfahren ferner folgende Schritte umfasst:

Empfangen, von einem Empfänger (200) einschließlich einer Vielzahl von Lichtempfangsvorrichtungen (202), des emittierten Lichts mit verschiedenen Farben;

Fast Fourier Transformationsverarbeitung, FFT-Verarbeitung, eines Empfangssignals, das von jeder der Vielzahl von Lichtempfangsvorrichtungen (202) ausgegeben wird, unter Verwendung der N Sinuswellensignale, um die N Modulationssignale für jede Farbe zu extrahieren;

Demodulieren der N Modulationssignale, um die N parallelen Datensignale wiederherzustellen; Erfassen einer Beziehung zwischen jedem der N Trägersignale und der Vielzahl von lichtemittierenden Vorrichtungen jeder Farbe basierend auf den N Modulationssignalen;

Wiederherstellen des Steuersignals basierend auf der Beziehung; und

Parallel-Seriell-Umwandlung der N parallelen Datensignale und des Steuersignals, um die seriellen Übertragungsdaten wiederherzustellen.

10. Verfahren zur Übertragung eines Signals in einem Kommunikationssystem mit sichtbaren Strahlen, wobei das Verfahren Folgende Schritte umfasst:

Empfangen durch einen Empfänger (200), einschließlich einer Vielzahl von Lichtempfangsvorrichtungen (202), eines Lichts von verschiedenen Farben und Ausgeben eines Empfangssignals jeder Farbe;

Fast-Fourier-Transformationsverarbeitung, FFT-Verarbeitung, eines Empfangssignals, das von jeder der Vielzahl von Lichtempfangsvorrichtungen (202) unter Verwendung von N Sinuswellensignalen ausgegeben wird, die eine orthogonale Trägerfrequenz aufweisen, um N Modulationssignale zu extrahieren, die dem Empfangssignal von jedem Farbe entsprechen;

Demodulieren der N Modulationssignale, um N parallele Datensignale wiederherzustellen;

Erfassen einer Beziehung zwischen jedem der Trägersignale, die dem Empfangssignal jeder Farbe entsprechen, und einer Vielzahl von lichtemittierenden Vorrichtungen (112) jeder Farbe basierend auf den N Modulationssignalen;

Wiederherstellen eines Steuersignals basierend auf der Beziehung; und

Parallel-Seriell-Umwandlung der N parallelen Datensignale und des Steuersignals, um die seriellen Übertragungsdaten wiederherzustellen.

**Revendications**

1. Un système de communication par rayonnement visible, comprenant :

un appareil de transmission (100) comprenant :

une pluralité de dispositifs d'émission de lumière (112) destinés à l'émission d'une lumière de différentes couleurs,

un convertisseur série à parallèle (102) destiné à la conversion série à parallèle de données de transmission série en N signaux de données parallèles et un signal de commande,

un modulateur (104) destiné à la génération de N signaux de modulation par la modulation des N signaux de données parallèles produits en sortie à partir du convertisseur série à parallèle,

un multiplicateur de signal d'onde sinusoïdale (106) destiné à la génération de N signaux de porteuse par la multiplication respectivement des N signaux de modulation par N signaux d'onde sinusoïdale possédant une fréquence de porteuse orthogonale,

une unité d'attribution de porteuse (108) destinée à la réception des N signaux de porteuse et du signal de commande, à l'attribution des N signaux de porteuse à la pluralité de dispositifs d'émission de lumière (112) en fonction du signal de commande, à l'ajout des signaux de porteuse attribués auxdits dispositifs d'émission de lumière et à la génération d'un signal de transmission destiné à chaque dispositif de la pluralité de dispositifs d'émission de lumière (112), et

un dispositif de commande d'émission de lumière (110) destiné à la commande de chaque dispositif de la pluralité de dispositifs d'émission de lumière (112) de façon à émettre une lumière à une puissance d'émission de lumière en fonction d'une amplitude de signal de son signal de transmission respectif.

2. Le système de communication par rayonnement visible selon la Revendication 1, comprenant en outre :

un appareil de réception (200) comprenant :

une pluralité de dispositifs de réception de lumière (202) destinés à la réception de la lumière des différentes couleurs et la production en sortie d'un signal de réception de chaque couleur,
une unité de transformée de Fourier rapide, FFT, (204) destinée à un traitement FFT des signaux de réception produits en sortie à partir de la pluralité de dispositifs de réception de lumière (202) au moyen des N signaux d'onde sinusoïdale de façon à extraire les N signaux de modulation,
un démodulateur (208) destiné à la démodulation des N signaux de modulation extraits de façon à restaurer les N signaux de données parallèles,
une unité de restauration (206) destinée à la détection d'une relation entre un signal de porteuse et un dispositif d'émission de lumière (112) de chaque couleur en fonction des N signaux de modulation et la restauration du signal de commande à partir des N signaux de modulation, et
un convertisseur parallèle à série (212) destiné à la conversion parallèle à série
des N signaux de données parallèles et du signal de commande de façon à restaurer les données de transmission série,
où N est un entier positif.

3. Le système de communication par rayonnement visible selon la Revendication 1 ou 2, où l'unité d'attribution de porteuse (108) comprend :

N commutateurs (132, 134, 136), chaque commutateur comprenant un port d'entrée dans lequel chaque signal de porteuse est entré et une pluralité de ports de sortie correspondant à la pluralité de dispositifs d'émission de lumière (112) respectivement, destinés à la commutation d'une destination de sortie de chacun des signaux de porteuse entrés dans le port d'entrée vers tout port des ports de sortie,
un dispositif de commande de commutateur (138) destiné à la commande de chacun des N commutateurs (132, 134, 136) en fonction du signal de commande et la commande de la destination de sortie des signaux de porteuse entrés dans chacun des N commutateurs (132, 134, 136), et
une pluralité d'additionneurs (142, 144, 146) destinés à l'ajout des signaux de porteuse produits en sortie à partir du port de sortie correspondant auxdits dispositifs d'émission de lumière (112) pour les N commutateurs (132, 134, 136), la pluralité d'additionneurs (142, 144, 146) étant du même nombre que la pluralité de dispositifs d'émission de lumière (112).

4. Le système de communication par rayonnement visible selon l'une quelconque des Revendications 1 à 3, où l'unité d'attribution de porteuse (108) est configurée de façon à attribuer des signaux de porteuse de sorte qu'un même signal de porteuse ne soit pas attribué à différentes couleurs.

5. Le système de communication par rayonnement visible selon la Revendication 2, où l'unité de restauration (206) comprend :

une unité de détermination de signal destinée à la détermination si chacun des N signaux de porteuse est inclus dans le signal de réception de chaque couleur, et
une unité de détection de combinaison (210) destinée à la détection de combinaisons de chacune des couleurs et de chacun des signaux de porteuse en fonction d'un résultat de détermination dans l'unité de détermination de signal et la restauration du signal de commande à partir d'une combinaison correspondante.

6. Un système de communication par rayonnement visible, comprenant :

un appareil de réception (200) comprenant :

une pluralité de dispositifs de réception de lumière (202) destinés à la réception d'une lumière de différentes couleurs et à la production en sortie d'un signal de réception de chaque couleur,

une unité de transformée de Fourier rapide, FFT, (204) destinée à un traitement FFT des signaux de réception produits en sortie à partir de la pluralité de dispositifs de réception de lumière (202) au moyen de N signaux d'onde sinusoïdale possédant une fréquence de porteuse orthogonale de façon à extraire N signaux de modulation correspondant au signal de réception de chaque couleur,

un démodulateur (208) destiné à la démodulation des N signaux de modulation extraits de façon à restaurer N signaux de données parallèles,

une unité de restauration (206) destinée à la détection d'une relation entre un signal de porteuse correspondant au signal de réception de chaque couleur et un dispositif d'émission de lumière (112) de chaque couleur en fonction des N signaux de modulation, et la restauration d'un signal de commande à partir des N signaux de modulation, et

un convertisseur parallèle à série (212) destiné à la conversion parallèle à série des N signaux de données parallèles et du signal de commande de façon à restaurer les données de transmission série,

où N est un entier positif.

7. Le système de communication par rayonnement visible selon la Revendication 6, où l'unité de restauration (206) comprend :

une unité de détermination de signal destinée à la détermination si chacun des N signaux de porteuse est inclus dans le signal de réception de chaque couleur, et

une unité de détection de combinaison (210) destinée à la détection de combinaisons de chacune des couleurs et de chacun des signaux de porteuse en fonction d'un résultat de détermination dans l'unité de détermination de signal et la restauration du signal de commande à partir d'une combinaison correspondante.

8. Un procédé de transmission d'un signal dans un système de communication par rayonnement visible, comprenant les opérations suivantes :

la conversion série à parallèle, par un émetteur (100) comprenant une pluralité de dispositifs d'émission de lumière (112), de données de transmission série en N signaux de données parallèles et d'un signal de commande,

la modulation des N signaux de données parallèles de façon à générer N signaux de modulation,

la génération de N signaux de porteuse par la multiplication des N signaux de modulation par N signaux d'onde sinusoïdale possédant une fréquence de porteuse orthogonale, respectivement,

l'attribution des N signaux de porteuse à la pluralité de dispositifs d'émission de lumière (112) en fonction du signal de commande,

l'ajout de signaux de porteuse attribués à un même dispositif d'émission de lumière (112),

la génération d'un signal de transmission destiné à chaque dispositif de la pluralité de dispositifs d'émission de lumière (112),

la commande de chaque dispositif de la pluralité de dispositifs d'émission de lumière (112) de façon à émettre une lumière dans une puissance d'émission de lumière en fonction d'une amplitude de signal de son signal de transmission.

9. Le procédé de transmission d'un signal dans un système de communication par rayonnement visible selon la Revendication 8, comprenant en outre les opérations suivantes :

la réception, par un récepteur (200) comprenant une pluralité de dispositifs de réception de lumière (202), de la lumière émise de différentes couleurs,

le traitement par une transformée de Fourier rapide, FFT, d'un signal de réception produit en sortie à partir de chaque dispositif de la pluralité de dispositifs de réception de lumière (202) au moyen des N signaux d'onde sinusoïdale de façon à extraire les N signaux de modulation pour chaque couleur,

la démodulation des N signaux de modulation de façon à restaurer les N signaux de données parallèles,

la détection d'une relation entre chacun des N signaux de porteuse et la pluralité de dispositifs d'émission de lumière de chaque couleur en fonction des N signaux de modulation,

la restauration du signal de commande en fonction de la relation, et

la conversion parallèle à série des N signaux de données parallèles et du signal de commande de façon à restaurer les données de transmission série.

10. Un procédé de transmission d'un signal dans un système de communication par rayonnement visible, comprenant les opérations suivantes :

la réception, par un récepteur (200) comprenant une pluralité de dispositifs de réception de lumière (202), d'une lumière de différentes couleurs et la production en sortie d'un signal de réception de chaque couleur,

le traitement par une transformée de Fourier rapide, FFT, d'un signal de réception produit en sortie à partir de chaque dispositif de la pluralité de dispositifs de réception de lumière (202) au moyen de N signaux d'onde sinusoïdale possédant une fréquence de porteuse orthogonale de façon à extraire N signaux de modulation correspondant au signal de réception de chaque couleur,
la démodulation des N signaux de modulation de façon à restaurer N signaux de données parallèles,
la détection d'un relation entre chacun des N signaux de porteuse correspondant au signal de réception de chaque couleur et une pluralité de dispositifs d'émission de lumière (112) de chaque couleur en fonction des N signaux de modulation,
la restauration d'un signal de commande en fonction de la relation, et
la conversion parallèle à série des N signaux de données parallèles et du signal de commande de façon à restaurer les données de transmission série.

[Fig. 1]

[Fig. 2]

[Fig. 3]

[Fig. 4]

(a)

Cr OUTPUT

f1    f2    f3    f

(b)

Cg OUTPUT

f1    f2    f3    f

(c)

Cb OUTPUT

f1    f2    f3    f

[Fig. 5]

204

FFT UNIT

SIGNAL DETECTION UNIT

9

252

SIGNAL
SELECTION
UNIT

SIGNAL F1
SIGNAL F2
SIGNAL F3

254

LEVEL
DETERMINATION
UNIT

9 BITS

THRESHOLD VALUE

[Fig. 6]

TABLE 1: COMPARISON OF INFORMATION TRANSMISSION QUANTITY

| NUMBER OF LEDS (NC) | NUMBER OF CARRIERS (NF) | TRANSMISSION DATA QUANTITY (EMBODIMENT) | TRANSMISSION DATA QUANTITY (WDM) |
|---|---|---|---|
| 3 | 3 | 3.87 BITS | 3 BITS |
| 3 | 4 | 3.74 BITS | 3 BITS |
| 3 | 10 | 3.42 BITS | 3 BITS |
| 3 | 100 | 3.20 BITS | 3 BITS |
| 4 | 4 | 4.80 BITS | 4 BITS |
| 5 | 5 | 5.54 BITS | 5 BITS |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI2008252444 B

- JP 2007081703 A

**Non-patent literature cited in the description**

- **ENGALA, H. et al.** OFDM Visible Light Wireless Communication Based on White LEDs. *IEEE VTS Vehicular Technology Conference Proceedings,* 01 April 2007, 2185-2189